# EUROPEAN PATENT APPLICATION

(11) **EP 3 184 931 A1**
(43) Date of publication of application: **28.06.2017**
(21) Application number: 15833501.8
(22) Date of filing: 30.06.2015
(51) Int. Cl.: F24J 2/00, C09K 5/00

(54) **SOLAR WATER HEATING AUXILIARY HEAT STORAGE DEVICE AND POWER PLANT BOILER SOLAR WATER HEATING SUPPLY SYSTEM FORMED THEREOF**

(30) Priority: 22.08.2014 CN 201410419863
(71) Applicant: Zhongying Changjiang International New Energy Investment Co., Ltd, Wuhan Hubei 430223 (CN)
(72) Inventor: CHEN, Yilong, Wuhan Hubei 430223 (CN); HU, Shuchuan, Wuhan Hubei 430212 (CN); ZHANG, Yanfeng, Wuhan Hubei 430212 (CN)
(74) Representative: Zeuner Summerer Stütz
(86) International application number: PCT/CN2015/082768
(87) International publication number: WO 2016/026351

(57) **Abstract**

A solar water heating auxiliary heat storage device and a solar water heating supply system of a power plant boiler (1), the solar water heating supply system being formed of the solar water heating auxiliary heat storage device. The solar water heating auxiliary heat storage device comprises at least one molecular sieve heat storage bed (18) and a heat storage water tank (17). The molecular sieve heat storage bed (18) comprises a cylindrical heat storage bed outer casing (18.1), and several heat storage tubes (18.5) are provided within the heat storage bed outer casing (18.1). Each heat storage tube (18.5) is formed of a metal tube (18.5.1) having a mesh and an adsorbent layer (18.5.2) attached to a surface of the metal tube (18.5.1) having the mesh, and is used for heat storage. An adsorbent material in the adsorbent layer (18.5.2) is a molecular sieve adsorbent material capable of pairing with water to act as a working medium pair. The system makes full use of solar energy as a supplementary fuel of the power plant boiler (1), normal operation of the boiler (1) is not affected by instability, intermittency, etc. of the solar energy, and power plant costs are significantly reduced.

## Description

### FIELD OF THE INVENTION

The invention relates to a water supply system for a boiler of an electric power plant, and more particularly to a solar water heating auxiliary heat storage device and a solar water heating auxiliary supply system comprising the same.

### BACKGROUND OF THE INVENTION

As present, the world's energy is very short, but the boiler, especially large-scale power plant boiler, consumes a large quantity of different kinds of energies including coal, natural gas, and biomass. As featuring instability and intermittence, the solar energy has not been included in the rank of boiler fuel. With the development of science, middle-temperature solar thermal collectors are developed, and the heat storage technology has also been improved, making solar energy as a supplementary fuel boiler possible.

Taken the biomass power plants as an example, the solar energy as the supplementary fuel for the boiler is of special significance for the biomass power plants. Because the capacities of the current biomass power plants are often not large, mostly between 30 and 50 MW, even the solar energy replenishes 1/3 of the fuel, the economic benefits are considerable. Taken a 30 MW biomass power plant as an example, when the solar energy replenishment reaches 1/3 of the fuel, then approximately 70 thousand tons of biomass fuels can be saved, which is about 31.5 million RMB. In addition, since the solar energy replenishment is required to be 1/3 of fuel, the occupied area for the solar energy device is not large, thus being operable.

### SUMMARY OF THE INVENTION

In view of the above-described problems, it is one objective of the invention to provide a solar water heating auxiliary heat storage device and a solar water heating auxiliary supply system comprising the same. The solar energy is fully utilized as a supplementary fuel of the boiler of the electric power plant, and the normal operation of the boiler is not affected by the instability and intermittence of the solar energy, thus significantly decreasing the production cost of the electric power plant.

Technical solution of the invention is as follows:
A solar water heating auxiliary heat storage device comprises at least one molecular sieve heat storage bed and a heat storage water tank. The molecular heat storage bed comprises a cylindrical house of the molecular heat storage bed and a plurality of heat storage pipes disposed in the house of the molecular heat storage bed. The heat storage pipe is formed by metal pipes having areolae and an absorbent layer adhered on a surface of each of the metal pipes having areolae for heat storage. An absorbent material in the absorbent layer is a molecular sieve absorbent material adapted to match with water as a heat storage working medium. Two ends of the house of the heat storage bed are both configured with sealing valves and respectively connected to an air inlet and an air outlet of an air preheater via air pipes. A side of one end of the house of the heat storage bed is configured with a water inlet for connecting to a water outlet of the heat storage water tank, and a side of the other end of the house of the heat storage bed is configured with a water outlet for outputting hot water to subsequent equipment.

In the above technical solution, the absorbent layer is formed by mixing the absorbent material with a metal powder having good heat conductivity or the absorbent layer adopts the absorbent material prepared using chemical polymerization.

In the above technical solution, the absorbent material in the absorbent layer adopts a silica gel, a natural zeolite, an artificial zeolite, calcium chloride, or a composite absorbent material.

In the above technical solution, the absorbent material in the absorbent layer is an artificial zeolite 13X molecular sieve.

In the above technical solution, the house of the heating storage bed is formed by double layers of steel plates sandwiched with a polyurethane insulating layer.

A solar water heating auxiliary supply system comprising the above solar water heating auxiliary heat storage device, the system comprising: a condenser, a condensate pump, a shaft sealing heater, multiple stages of low-pressure heaters, a deaerator, and multiple stages of high-pressure heaters respectively connected to gas outlets of a turbine. A last stage high-pressure heater is connected to a water inlet of the boiler. Water pipes are configured with valves and water pumps, and air pipes are configured with valves and blower fans. The system further comprises: a middle-temperature solar thermal collector, a secondary solar heater, and the solar water heating auxiliary heat storage device.

A water inlet of the middle-temperature solar thermal collector is connected to a water outlet of a shaft sealing heater, and a water outlet of the middle-temperature solar thermal collector is connected to a water inlet of a last stage low-pressure heater.

A water inlet of the secondary solar heater is connected to the water outlet of the middle-temperature solar thermal collector, and a water outlet of the secondary solar heater is connected to the water inlet of the last stage low-pressure heater, a water inlet of a first stage high-pressure heater, and a water inlet of the air preheater.

A water outlet of the air preheater is connected to the water inlet of the middle-temperature solar thermal collector. A water outlet of the molecular sieve heat storage bed of the solar water heating auxiliary heat storage device is connected to the water inlet of a last stage low-pressure heater.

In the above technical solution, the middle-temperature solar thermal collector is a vacuum solar thermal collector having a thermal collecting temperature of exceeding 100°C.

In the above technical solution, the secondary solar heater is a chute-type solar thermal collector or a CPC thermal collector.

In the above technical solution, the water outlet of the secondary solar heater is further connected to an absorbing type refrigerator, and a water outlet of the absorbing type refrigerator is connected to the water inlet of the middle-temperature solar thermal collector.

In the above technical solution, the absorbing type refrigerator is a lithium bromide refrigerator.

Compared with the prior art, advantages of the invention are summarized as follows:
1) The solar vacuum tube collector is adopted as a primary heating device to prepare hot water at a temperature of 150°C above or steam at a pressure of 0.2 megapascal when the solar irradiation intensity is enough (> 600 w/m²), and the hot water or the steam can be directly transported to the low-pressure heater by the water pump to replenish the water for the boiler.
2) The secondary solar heater is used to further improve the water temperature, which is not only energy-saving but also ensures the utilization of the solar energy when the solar irradiation intensity is relatively low. When the solar irradiation intensity is high enough, the secondary solar heater is able to heat the water to the temperature of 150°C above, and the heated water is then directly introduced to the high-pressure heater for replenishing the water supply of the boiler.
3) The key device of the system is the molecular sieve heat storage bed, which is the innovative device of the invention. The molecular sieve heat storage bed adopts molecular sieve for heat absorption and heat storage, has a large heat storage capacity, and is a key device to ensure the successive heat supply of the system. On one hand, the molecular sieve heat storage bed is able to utilize the high temperature water heated by the secondary solar heater to preserve heat quantity of high level, and on the other hand, during nocturnal periods or when the solar irradiation is relatively low, the molecular sieve heat storage bed is able to heat the hot water released from the heat storage water tank to further improve the water temperature, thus ensuring the quality and the succession of the supplied hot water. Besides, the molecular sieve heat storage bed is also advantageous in its great amplitude of temperature increase, large heat storage capacity, good heat preservation performance, and low production cost.
4) In addition to fully utilize the solar energy, the invention also fully utilizes the exhaust heat of the electric power plant as the condensate from the gas discharge of the power plant serves as the working medium.
5) As the water supplied by the system has a relatively high temperature, it can also be used as the thermal source of the absorbent refrigerator and therefore provides multi-path of use for the water heating system.
6) The secondary solar heater is adopted to make the water heating system acquire heat quantity of relatively high level, in the meanwhile, the molecular sieve heat storage device is adopted to ensure the continuous operation of the system. Compared with the high-temperature molten salt heat storage system that necessitates great investment and has complex operation procedures, the heat storage device of the invention is much cheap and is advantageous in its large amplitude of temperature increase, large heat storage capacity, and excellent insulating performance, therefore being adaptable to the auxiliary water heating supply system of the boiler of the electric power plant.

### BRIEF DESCRIPTION OF THE DRAWINGS

FIG. **1** is a structure diagram of a solar water heating auxiliary supply system in accordance with one embodiment of the invention;
FIG **2** is a structure diagram of a molecular sieve heat storage bed of FIG. 1;
FIG **3** is a cross-sectional view taken from part A-A of FIG 1;
FIG **4** is a transverse cross section of a heat storage pipe of FIGS. 2-3;
FIG **5** is a diagram illustrating working principle of a system of FIG. **1****;**

In the drawings, the following numbers are used: **1.** Boiler; **2.** Turbine; **3.** Electric generator; **4.** Condenser; **5.** Condensate pump; **6.** Deaerator; **7.** Deaeration water tank; **8-10.** Low-pressure heater; **11.** Motor-driven feed pump; **12-13.** High-pressure heater; **14.** Shaft sealing heater; **15.** Flat solar thermal collector; **16.** CPC thermal collector; **17.** Heat storage water tank; **18.** Molecular sieve heat storage bed (in which, **18.1.** House of heat storage bed; **18.2.** Sealing valve; **18.3.** Ventilation fan; **18.4.** Water adjusting valve; **18.5.** Heat storage pipe; **18.5.1.** Metal pipe having areolae; **18.5.2.** Absorbent layer); **19.** Constant pressure device; **10.** Lithium bromide refrigerator; **21.** Water pump; **22.** Blower fan; and **23.** Air preheater.

### DETAILED DESCRIPTION OF THE EMBODIMENTS

Specific embodiments of the invention are described in details combining with the drawings.

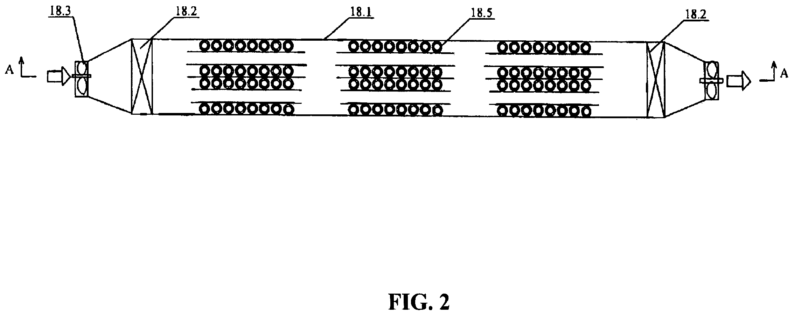

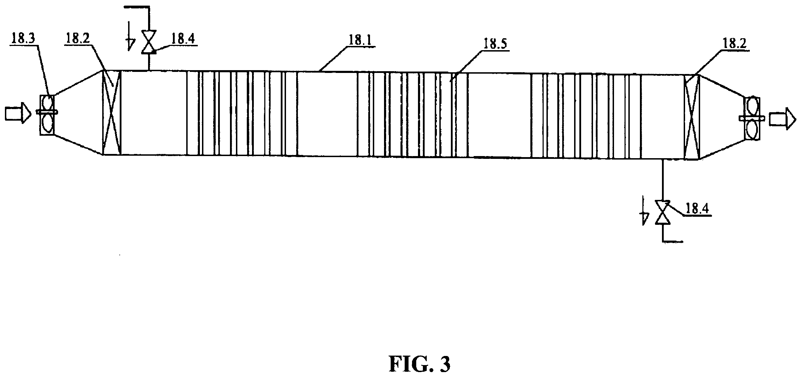

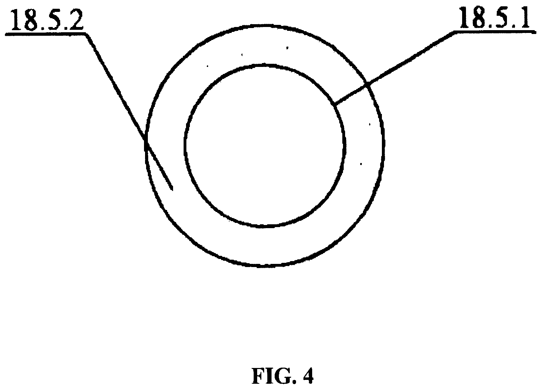

As shown in FIGS. **2-4****,** a solar water heating auxiliary heat storage device comprises at least one molecular sieve heat storage bed and a heat storage water tank **17.** The molecular heat storage bed **18** comprises a cylindrical house **18.1** of the molecular heat storage bed and a plurality of heat storage pipes **18.5** disposed in the house **18.1** of the molecular heat storage bed. The heat storage pipe **18.5** is formed by metal pipes **18.5.1** having areolae and an absorbent layer **18.5.2** adhered on a surface of each of the metal pipes **18.5.1** having areolae for the purpose of heat storage. An absorbent material in the absorbent layer **18.5.2** is a molecular sieve absorbent material adapted to match with water as a heat storage working medium. Two ends of the house **18.1** of the heat storage bed are both configured with sealing valves **18.2** and respectively connected to an air inlet and an air outlet of an air preheater **23** via air pipes. A side of one end of the house **18.1** of the heat storage bed is configured with a water inlet for connecting to a water outlet of the heat storage water tank **17,** and a side of the other end of the house **18.1** of the heat storage bed is configured with a water outlet for outputting hot water to subsequent equipment.

As the solar auxiliary heat storage device just provides water at 150-250°C for the purpose of saving the fuel for the boiler rather than providing a heat source at 600-800°C for direct electric power generation, the heat storage device does not need the high temperature molten salt heat storage system that necessitates great investment and has complex operation procedures but adopts a simple low temperature heat storage device. The heat storage device is able to totally meet the demands.

To make the heat preservation easier, the house **18.1** of the heat storage bed in this embodiment is optionally formed by double layers of steel plates sandwiched with a polyurethane insulating layer having a thickness of approximately 100 mm. The heat storage water tank **17** is optionally made of steel and the insulating layer or made of reinforced concrete structure and the heating insulating layer.

The absorbent layer **18.5.2** of this embodiment is preferably formed by mixing the absorbent material with a metal powder having good heat conductivity. The absorbent material in the absorbent layer **18.5.2** is preferably a silica gel, a natural zeolite, an artificial zeolite, or a composite absorbing agent.

The absorbent layer **18.5.2** of this embodiment is most preferably formed by mixing an artificial zeolite 13X molecular sieve with a metal powder having good heat conductivity and adhering a resulting mixture to the surfaces of the metal pipes **18.5.1** having areolae. It is because the low production cost and strong absorption capacity that the artificial zeolite 13X molecular sieve is selected as the heat storage material. Generally, the artificial zeolite 13X molecular sieve has a heat storage density of 640 kj/kg and is renewable and recyclable. The heat storage capacity is stable and no heat loss occurs in the absence of extraction. If the chemical polymerization is adopted, a thin layer of highly-heat-conductive substance is covered to a surface of the particle of the absorbing agent. Thus, a consecutive layer of heat conductive mesh is formed on the surface of the particle of the absorbing agent by using a small amount of the highly-heat-conductive polymer to improve the heat conductive performance of the particle and to reduce the temperature gradient of the internal heat transfer in the absorbing agent, thus enhancing heat transfer performance of the absorbing agent. And such means have been proved to have the minimum influence on the absorbing capacity of the absorbing agent. The project preliminarily adopts the electrically conductive polyaniline as the heat conductive working medium, and such working medium can be directly oxidized and polymerized on the surface of the zeolite particles to make the small amount of the heat conductive polyaniline to form a uniform and consecutive layer of heat conductive mesh, thus significantly improve the conductive coefficient of the absorbing agent. In the meanwhile, in order to agglomerate the absorbing agent and the high molecular heat conductive layer covered thereon into a whole, some adhesives are added to the absorbing agent to adhere the zeolite as a whole in addition to closely tamping the arrangements in the heat storage devices. During the fabricating process, it should be noted that the absorbing agent must have enough absorbing channels in avoiding large decrease in the absorbing capacity of the absorbing agent. And when selecting the adhesive, the adhesive must be avoided to react with the absorbing agent.

Working principle of the heat storage device is as follows: when the mechanism stores the heat, water heated by the solar energy is sent to the air preheater **23,** a temperature of heated air generally reaches 120-150°C. The heated air is then introduced to the molecular sieve heat storage bed **18** where the heated air is enforced to pass over the heat storage pipe **18.5** and exchanges heat with the absorbent layer **18.5.2.** The artificial zeolite molecular sieve is heated and the water vapor is evaporated. Thus, the heat absorption and storage are realized and the humid air is discharged. After the heat storage, the sealing valves **18.2** at the two ends are closed. When the mechanism discharges heat, the water approximately at 60-70°C in the heat storage water tank **17** is introduced to the molecular sieve heat storage bed **18,** the water fully contacts with the arid artificial zeolite to release heat, so that the water temperature is improved. To match with the volume of the heat storage water tank **17,** the size of the molecular sieve heat storage bed **18** must be not too large. Optionally, 4-8 molecular sieve heat storage beds **18** are arranged in parallel to ensure the normal and stable operation of the system.

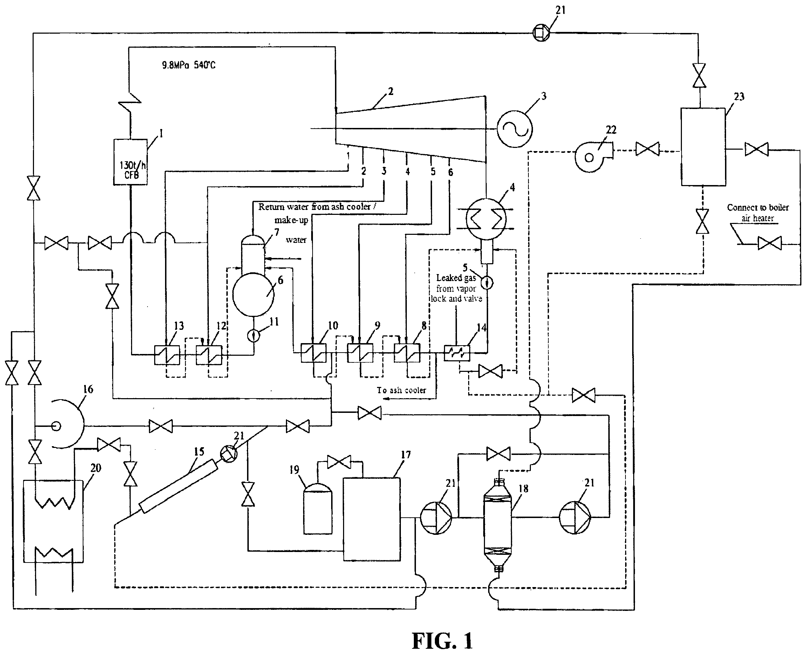

A solar water heating supply system of a boiler of an electric power plant is shown in FIGS. **1-4****.** The system comprises: a condenser **4,** a condensate pump **5,** a shaft sealing heater **14,** third stage low-pressure heaters 8, **9, 10,** a deaerator **6,** a deaeration water tank **7,** second stage high-pressure heaters **12, 13** respectively connected to gas outlets of a turbine. A last stage high-pressure heater **13** is connected to a water inlet of the boiler **1.** The system further comprises: a middle-temperature solar thermal collector, a secondary solar heater, and a solar water heating auxiliary heat storage device.

The middle-temperature solar thermal collector adopts a flat solar thermal collector **15.** A water inlet of the flat solar thermal collector **15** is connected to a water outlet of the shaft sealing heater **14,** and a water outlet of the flat solar thermal collector **15** is connected to a water inlet of a last stage low-pressure heater **10.**

The secondary solar heater adopts a CPC thermal collector **16.** A water inlet of the CPC thermal collector **16** is connected to a water outlet of the flat solar thermal collector **15,** and a water outlet of the CPC thermal collector **16** is connected to the water inlet of the last stage low-pressure heater, a water inlet of a first stage high-pressure heater **12,** and a water inlet of the air preheater **23.** A water outlet of the air preheater **23** is connected to the water inlet of the flat solar thermal collector **15.**

A water outlet of the molecular sieve heat storage bed **18** of the solar water heating auxiliary heat storage device is connected to the water inlet of the last stage low-pressure heater **10.** To adapt to the use in nocturnal periods, the design capacity of the heat storage water tank **17** is 8-10 hours of capacity of the boiler **1.**

In the meanwhile, to realize different working conditions, water pipes are configured with valves and water pumps **21** on related positions if necessary. And air pipes are configured with valves and blower fans **22.**

Working principle of the heat storage device is as follows: when the mechanism stores the heat, water heated by the solar energy is sent to the air preheater **23,** a temperature of heated air generally reaches 120-150°C. The heated air is then introduced to the molecular sieve heat storage bed **18** where the heated air is enforced to pass over the heat storage pipe **18.5** and exchanges heat with the absorbent layer **18.5.2.** The artificial zeolite molecular sieve is heated and the water vapor is evaporated. Thus, the heat absorption and storage are realized and the humid air is discharged. After the heat storage, the sealing valves **18.2** at the two ends are closed. When the mechanism discharges heat, the water approximately at 60-70°C in the heat storage water tank **17** is introduced to the molecular sieve heat storage bed **18,** the water fully contacts with the arid artificial zeolite to release heat, so that the water temperature is improved. To match with the volume of the heat storage water tank **17,** the size of the molecular sieve heat storage bed **18** must be not too large. Optionally, 4-8 molecular sieve heat storage beds **18** are arranged in parallel to ensure the normal and stable operation of the system.

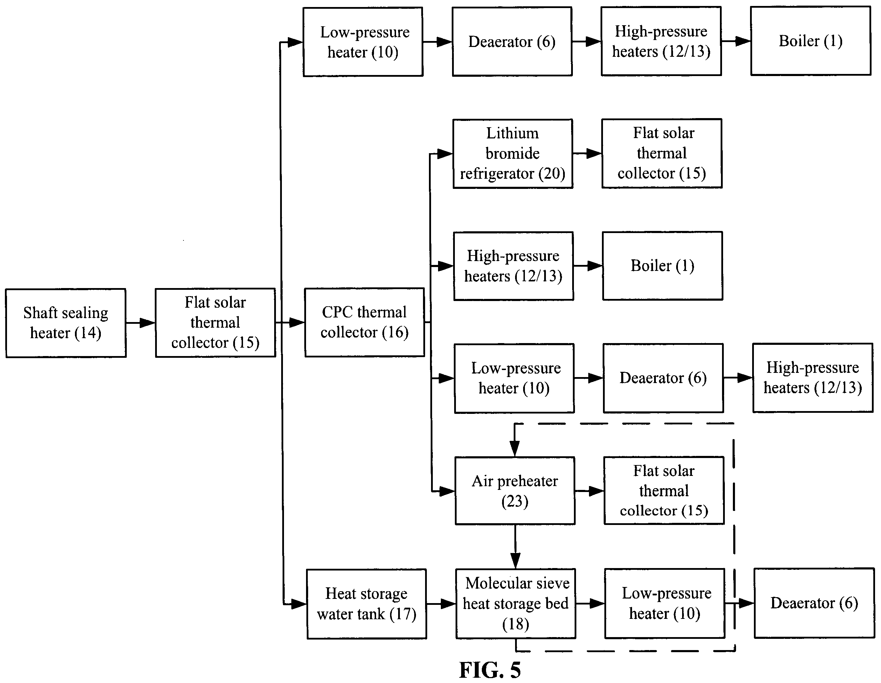

Working principle of the invention is shown in FIGS. **1-5****.** Condensate is extracted from the shaft sealing heater **14** of the electric power plant as an operating working medium of the hot water supply system and is transported to the flat solar thermal collector **15** via the water pump **21.** In diurnal periods when the solar irradiation intensity is strong enough (> 600 w/m²), the solar energy is absorbed to heat the water to a temperature of 150°C. The heated water is output in three paths as follows:
1) The heated water is directly introduced to the low-pressure heater **10** and then to the deaerator **6.** Deaerated water passes through the high pressure heaters **12, 13** to the boiler **1.**
2) The heated water enters the heat storage water tank **17** for storage. During nocturnal periods when the solar energy cannot be gathered, the heated water is extracted from the heat storage water tank **17** to the molecular sieve heat storage bed **18** by the water pump **21** for secondary heating to make a water temperature 150°C above. Thereafter the heated water is sent to the low-pressure heater **10** and then to the deaerator **6.** Deaerated water respectively passes through the high-pressure heaters **12, 13** to the boiler **1.** Thus, the solar energy was utilized in the nocturnal periods or other conditions in the absence of the solar energy.
3) The heated water is introduced to the CPC thermal collector **16** by the water pump for secondary heating, and the heated water is used in four respects: 3.1) when a water temperature at the water outlet of the CPC thermal collector **16** is higher than 250°C, the heated water is directly introduced to the high-pressure heaters **12, 13** where the water is heated and then sent to the boiler **1;** 3.2) the heated water is sent to an absorbing type refrigerator as a heat source for refrigeration, the heated water at the outlet end is then sent back to a water inlet of the flat solar thermal collector **15** for recycling; 3.3) when the solar irradiation is weak and the water temperature at the water outlet of the CPC thermal collector **16** may be lower than 200°C, the discharged water is sent to the low-pressure heater **10** and then to the deaerator **6** for deaeration; and the deaerated water respectively passes through the high-pressure heaters **12, 13** and reaches the boiler **1;** and 3.4) the heated water is sent to the air preheater **23** to heat the low temperature humid air in the molecular sieve heat storage bed **18.** The energy stored in the absorbent layer **18.5.2** is utilized, and the discharged water from the air preheater **23** is returned to the flat solar thermal collector **15.**

The working conditions in the above is switchable according to practical conditions.

The key of the invention lies in the solar water heating and supplying system formed by the middle-temperature solar heater, the secondary solar heater, the air heater, deaeration water tank, the molecular sieve heat storage bed **18,** and the absorbing type refrigerator mechanism is able to continuously supply water at 60-250°C to the electric power plant when being connected to the water feeding system of the boiler of the electric power plant. The solar water heating and supplying system fully utilizes the solar energy as the supplementary fuel for the boiler of the electric power plant, and the normal operation of the boiler is not affected by the instability and intermittence of the solar energy, thus the production cost of the electric power plant is significantly reduced. The key device of the system is the molecular sieve heat storage bed **18,** which make the system continuously provide heat quantity of high level. Thus, the protection scope of the invention is not limited by the above described embodiments. It will be obvious to those skilled in the art that changes and modifications may be made without departing from the invention in its broader aspects, for example, the number and the arrangements of the heat storage pipe **18.5** of the molecular sieve heat storage bed **18** are not limited to the specific modes in the above embodiments, as long as the two ends of the molecular sieve heat storage bed allow the air to pass through and the two sides thereof allow the water to pass through and the heat storage requirements are satisfied. For another example, the use of the artificial zeolite as the absorbent material in the absorbent layer **18.5.2** is a preferred embodiment, while the use of the active carbon or silica gel as the heat storage materials are also able to realize the technical scheme of the invention. For still another example, the secondary solar heater can not only adopt the CPC thermal collector **16** but also other middle/high-temperature thermal collector including the chute type solar thermal collectors. Therefore, the aim in the appended claims is to cover all such changes and modifications as fall within the true spirit and scope of the invention.

## Claims

1. A solar water heating auxiliary heat storage device, **characterized by comprising** at least one molecular sieve heat storage bed (18) and a heat storage water tank (17); wherein
the molecular heat storage bed (18) comprises a cylindrical house (18.1) and a plurality of heat storage pipes (18.5) disposed in the house (18.1) of the molecular heat storage bed;
the heat storage pipe (18.5) is formed by metal pipes (18.5.1) having areolae and an absorbent layer (18.5.2) adhered on a surface of each of the metal pipes (18.5.1) having areolae for heat storage;
an absorbent material in the absorbent layer (18.5.2) is a molecular sieve absorbent material adapted to match with water as a heat storage working medium; two ends of the house (18.1) of the heat storage bed are both configured with sealing valves (18.2) and respectively connected to an air inlet and an air outlet of an air preheater (23) via air pipes; and
a side of one end of the house (18.1) of the heat storage bed is configured with a water inlet for connecting to a water outlet of the heat storage water tank (17), and a side of the other end of the house (18.1) of the heat storage bed is configured with a water outlet for outputting hot water to subsequent equipment.

2. The device of claim 1, **characterized in that** the absorbent layer (18.5.2) is formed by mixing the absorbent material with a metal powder having good heat conductivity or the absorbent layer (18.5.2) adopts the absorbent material prepared using chemical polymerization.

3. The device of claim 1 or 2, **characterized in that** the absorbent material in the absorbent layer (18.5.2) adopts a silica gel, a natural zeolite, an artificial zeolite, calcium chloride, or a composite absorbent material.

4. The device of claim 3, **characterized in that** the absorbent material in the absorbent layer (18.5.2) is an artificial zeolite 13X molecular sieve.

5. The device of claim 1 or 2, **characterized in that** the house of the heating storage bed is formed by double layers of steel plates sandwiched with a polyurethane insulating layer.

6. A solar water heating auxiliary supply system comprising the device of any of claims 1-5, the system comprising: a condenser (4), a condensate pump (5), a shaft sealing heater (14), multiple stages of low-pressure heaters, a deaerator (6), and multiple stages of high-pressure heaters respectively connected to gas outlets of a turbine; a last stage high-pressure heater is connected to a water inlet of the boiler (1); and water pipes are configured with valves and water pumps (21), and air pipes are configured with valves and blower fans (22);
**characterized in that**
the system further comprises: a middle-temperature solar thermal collector, a secondary solar heater, and a solar water heating auxiliary heat storage device;
a water inlet of the middle-temperature solar thermal collector is connected to a water outlet of a shaft sealing heater (14), and a water outlet of the middle-temperature solar thermal collector is connected to a water inlet of a last stage low-pressure heater;
a water inlet of the secondary solar heater (16) is connected to the water outlet of the middle-temperature solar thermal collector, and a water outlet of the secondary solar heater is connected to the water inlet of the last stage low-pressure heater, a water inlet of a first stage high-pressure heater (12), and a water inlet of the air preheater (23); a water outlet of the air preheater (23) is connected to the water inlet of the middle-temperature solar thermal collector; and
a water outlet of the molecular sieve heat storage bed (18) of the solar water heating auxiliary heat storage device is connected to the water inlet of a last stage low-pressure heater.

7. The system of claim 6, **characterized in that** the middle-temperature solar thermal collector is a vacuum solar thermal collector having a thermal collecting temperature of exceeding 100°C.

8. The system of claim 6, **characterized in that** the secondary solar heater is a chute-type solar thermal collector or a CPC thermal collector.

9. The system of any of claims 6-8, **characterized in that** the water outlet of the secondary solar heater is further connected to an absorbing type refrigerator, and a water outlet of the absorbing type refrigerator is connected to the water inlet of the middle-temperature solar thermal collector.

10. The system of claim 9, **characterized in that** the absorbing type refrigerator is a lithium bromide refrigerator (20).
